# EUROPÄISCHE PATENTSCHRIFT

(11) **EP 3 085 520 B1**
(45) Veröffentlichungstag und Bekanntmachung des Hinweises auf die Patenterteilung: **19.07.2017**
(21) Anmeldenummer: 15164586.8
(22) Anmeldetag: 22.04.2015
(51) Int. Cl.: B29C 69/00, B60S 1/08, B26F 1/38, B29C 39/30

(54) **VERFAHREN UND VORRICHTUNG ZUR HERSTELLUNG EINES OPTISCHEN KOPPELELEMENTS AUS ELASTOMER**
METHOD AND DEVICE FOR PRODUCING AN OPTICAL COUPLING ELEMENT MADE FROM ELASTOMER
PROCÉDÉ ET DISPOSITIF DE PRODUCTION D'UN ÉLÉMENT DE COUPLAGE OPTIQUE EN ÉLASTOMÈRE

(43) Veröffentlichungstag der Anmeldung: 26.10.2016
(73) Patentinhaber: PMA/Tools AG, 47877 Willich (DE)
(72) Erfinder: Coenen, Dominik, 41747 Viersen (DE); Westerburg, Detlef, 41334 Nettetal (DE)
(74) Vertreter: DREISS Patentanwälte PartG mbB

(56) Entgegenhaltungen:
- EP-A2- 1 413 490
- EP-A2- 2 130 727
- DE-A1- 4 405 285
- DE-A1-102006 039 065
- DE-A1-102013 012 849
- US-A- 2 200 730
- US-A1- 2004 168 559
- US-A1- 2009 266 396
- DATABASE WPI Week 199238 Thomson Scientific, London, GB; AN 1992-311981 XP002748660, -& JP H04 216911 A (KANAI H) 7. August 1992 (1992-08-07)

## Beschreibung

Die Erfindung betrifft ein Verfahren und eine Vorrichtung zur Herstellung eines optischen Koppelelements aus Elastomer.

Optische Koppelelemente der vorstehend genannten Art sind aus der EP 2 130 727 A2 und der DE 10 2013 012 849 A1 bekannt und werden dazu verwendet, einen im Innenraum eines Fahrzeugs angeordneten optischen Sensor optisch mit der Fahrzeugscheibe zu koppeln. Für eine zuverlässige Funktion des Sensors ist es gewünscht, dass der Brechungsindex des für das Koppelelement verwendeten Materials dem Brechungsindex der Fahrzeugscheibe entspricht. Darüber hinaus ist es bevorzugt, dass die Transmission oder Durchlässigkeit des für das Koppelelement verwendeten Materials für Licht der relevanten Wellenlängen möglichst hoch ist. Dabei kann es sich je nach Anwendungsfall um

Licht im sichtbaren oder im unsichtbaren Spektralbereich handeln.

Aufgrund der vorstehenden Anforderungen werden im Stand der Technik als Materialien für das Koppelelement Silikonmaterialien verwendet. Beispiele für solche Silikonmaterialien sind durch die EP 2 181 023 B1 und die EP 2 130 727 A2 offenbart, auch bekannt unter den Handelsbezeichnungen "Silgel 612" und "Semicosil 912". Derartige Materialien werden beispielsweise von der Firma Bayer oder von der Firma Wacker angeboten.

Die vorstehend genannten Materialien werden zur "in situ"-Herstellung von Koppelelementen verwendet, wobei zunächst fließfähiges und dann aushärtendes Material in einen Raum im Gehäuse des optischen Sensors eingebracht wird. Das Sensorgehäuse wird anschließend an der Scheibe befestigt, sodass das ausgehärte Silikonmaterial dann an der Scheibe anliegt. Eine solche Herstellung gestaltet sich sowohl bei der Erstmontage als auch bei der Reparatur einer Fahrzeugscheibe als aufwändig. Bei der Reparatur einer Fahrzeugscheibe oder eines Sensors kommt als Nachteil hinzu, dass das nicht formstabile Koppelelement zerstört wird und somit nicht wiederverwendbar ist.

Eine Vorfertigung von Koppelelementen in eine Form ist allgemein aus den Dokumenten EP 1 413 490 A2 und DE 10 2006 039 065 A1 bekannt. Genaue Angaben zur Herstellung sind jedoch aus diesen Dokumenten nicht bekannt. Hiervon ausgehend liegt der vorliegenden Erfindung die Aufgabe zugrunde, ein Verfahren und eine Vorrichtung anzugeben, welche eine einfache, preisgünstige und flexible Herstellung eines optischen Koppelelements ermöglichen.

Diese Aufgabe wird durch ein Verfahren gelöst, welches umfasst:
- Einfüllen einer fließfähigen Elastomerrezeptur oder von deren Bestandteilen in eine Form zur Herstellung eines Flachkörpers, dessen Dicke abgestimmt ist auf die Dicke eines herzustellenden Koppelelements,
- Aushärten zu einem formstabilen Elastomer,
- Austrennen einzelner Koppelelemente aus dem Flachkörper.

Die vorstehend genannte Aufgabe wird auch durch eine Vorrichtung gelöst, welche umfasst: eine Form zum Einfüllen einer fließfähigen Elastomerrezeptur oder von deren Bestandteilen zur Herstellung eines Flachkörpers, dessen Dicke abgestimmt ist auf die Dicke eines herzustellenden Koppelelements, und ein Austrennwerkzeug zum Austrennen einzelner Koppelelemente aus dem Flachkörper.

Erfindungsgemäß wird zunächst ein Flachkörper hergestellt, dessen Dicke in einfacher Weise dadurch beeinflusst werden kann, dass in die Form eine größere oder kleinere Menge fließfähige Elastomerrezeptur oder deren Bestandteile eingefüllt werden. Es wird also eine in Dickenrichtung eines Koppelelements gesehen einseitig offene Form verwendet, beispielsweise eine Wanne.

Der Flachkörper erstreckt sich über eine größere Fläche, als es zur Herstellung eines einzelnen Koppelelements, vorzugsweise zur Herstellung mehrerer Koppelelemente, erforderlich ist. Da ein Austrennen einzelner Koppelelemente aus dem Flachkörper erfolgt, nachdem das Elastomer bereits ausgehärtet und formstabil ist, unterliegt ein aus dem Flachkörper ausgetrenntes Koppelelement keiner Schrumpfung mehr. Somit ist unabhängig von der für das Koppelelement verwendeten Rezeptur sichergestellt, dass die beim Austrennen des Koppelelements verwendete Kontur der Trennlinie exakt dem Umriss des fertigen Koppelelements entspricht.

Wenn im Rahmen der vorliegenden Erfindung von "formstabil" die Rede ist, ist gemeint, dass ein Koppelelement einzeln handhabbar ist, sodass das Koppelelement gelagert und für eine Montage an einem optischen Sensor und/oder einer Fahrzeugscheibe bereitgehalten werden kann. Das formstabile Koppelelement wird also nicht "in situ" in oder auf dem Sensorgehäuse hergestellt.

Bei einer Umstellung auf eine andere Elastomerrezeptur kann eine damit einhergehende Veränderung der Schrumpfung während des Aushärtevorgangs einfach durch Anpassung der Einfüllmenge in die Form ausgeglichen werden.

Das erfindungsgemäße Verfahren ermöglicht es, Nachteile zu vermeiden, die mit einer im Prinzip ebenfalls denkbaren Herstellung eines optischen Koppelelements im Spritzgießverfahren (oder Reaktionsspritzgießverfahren) unter Verwendung eines geschlossenen Spritzgießwerkzeugs einhergehen. Beispielsweise müssen für unterschiedliche Koppelelemente mit unterschiedlichen Abmessungen nicht jeweils eigene und teure Spritzgießwerkzeuge bereitgestellt werden. Darüber hinaus ist es nicht erforderlich, Spritzgießwerkzeuge bereitzustellen, welche jeweils ein Übermaß aufweisen, das jeweils exakt an eine mit einem Aushärtevorgang einhergehende Schrumpfung angepasst ist. Da das Maß der Schrumpfung auch von den für die Elastomerrezeptur verwendeten Bestandteilen abhängig ist, kann eine Änderung der Bestandteile die Umarbeitung oder Neuherstellung eines Spritzgießwerkzeugs erforderlich machen.

Im Rahmen der vorliegenden Erfindung kann nun eine besonders einfach aufgebaute Form verwendet werden, welche beispielsweise kreisförmig ist oder rechteckförmig. Dies wird dadurch ermöglicht, dass der Flachkörper flächenmäßig größer ist als mindestens ein Koppelelement und dass das Koppelelement aus dem Flachkörper nach Herstellung des Flachkörpers ausgetrennt wird.

Vorzugsweise wird das erfindungsgemäße Koppelelement aus einem Silikonelastomer hergestellt, wobei zur Herstellung des Flachkörpers eine fließfähige Silikonrezeptur oder deren Bestandteile in die Form eingefüllt werden.

Es ist möglich, die einzelnen Koppelelemente aus dem Flachkörper herauszutrennen, nachdem der aus ausgehärtetem, formstabilem Elastomer bestehende Flachkörper aus der Form entfernt wurde. Auf diese Weise kann die Form unmittelbar an den Aushärtevorgang anschließend wieder zur Herstellung eines weiteren Flachkörpers verwendet werden.

Bei einer bevorzugten Ausführungsform der Erfindung ist es jedoch vorgesehen, dass das Austrennen einzelner Koppelelemente aus dem Flachkörper erfolgt, während der Flachkörper nach seinem Aushärten noch in der Form angeordnet ist. Dies vereinfacht die Handhabung des Flachkörpers während des Austrennvorgangs einzelner Koppelelemente.

Eine weitere, bevorzugte Ausführungsform sieht vor, dass ein Bodenabschnitt des Bodens der Form ausgetrennt wird, wobei der Bodenabschnitt ein von dem Koppelelement ablösbares Schutzelement für die Unterseite des Koppelelements bildet. In diesem Zusammenhang ist es bevorzugt, dass die Austrennung eines Bodenabschnitts und die Austrennung eines Koppelelements simultan oder unmittelbar einander folgend durchgeführt wird, vorzugsweise unter Verwendung nur eines Stanzwerkzeugs.

Ferner ist es bevorzugt, dass die Form aus einem Kunststoffmaterial hergestellt ist, welches einfacher durchtrennt werden kann, als ein im Prinzip auch denkbares metallisches Material. Bevorzugte Kunststoffmaterialien sind Polystyrol (PS), Acrylnitril-Butadien-Styrol (ABS), Polycarbonat (PC), Polymethylmethacrylat (PMMA), Polyethylenterephthalat (PET), Polybutylenterephthalat (PBT), Polyethylen (PE), Polypropylen (PP), Silikon oder dergleichen. Ein Kunststoffmaterial hat darüber hinaus den Vorteil, besonders preisgünstig zu sein, wobei der Materialeinsatz für eine einzelne Form in Abhängigkeit von der Größe der Form für mehrere Koppelelemente genügt. Ein zwangsweise anfallender Verschnitt kann stofflich wiederverwendet werden, insbesondere bei Verwendung von thermoplastischen Kunststoffmaterialien.

Der Bodenabschnitt haftet an dem Koppelelement und kann unmittelbar vor dessen Montage an einer Fahrzeugscheibe entfernt werden. Auf diese Weise ist zumindest die Unterseite des Koppelelements gegen Verschmutzung und/oder mechanische Einflüsse geschützt. Darüber hinaus bildet der Bodenabschnitt einen stabilen Träger für das Koppelelement.

Es ist möglich, dass der Bodenabschnitt und das Koppelelement identisch große Flächen aufweisen. Dies hat den Vorteil, dass der Austrennvorgang zum Austrennen eines Koppelelements aus dem Flachkörper und zum Austrennen eines Bodenabschnitts aus dem Boden der Form sich besonders einfach gestaltet.

Eine bevorzugte Variante der Erfindung sieht jedoch vor, dass der Bodenabschnitt das Koppelelement mit mindestens einem Handhabungsabschnitt flächenmäßig überragt. Dies hat den Vorteil, dass der Bodenabschnitt an dem Handhabungsabschnitt ergriffen werden kann und das Schutzelement in einfacher Weise von dem Koppelelement entfernt werden kann, ohne dass es hierbei zu einem Berührkontakt mit einer optisch wirksamen Oberfläche des Koppelelements kommt.

Im Rahmen der Erfindung bevorzugte Möglichkeiten des Austrennens des Koppelelements und/oder des Bodenabschnitts sind Ausstanzen, Wasser- oder Laserstrahlschneiden. Diese Verfahrensmöglichkeiten bestehen sowohl für den Fall, dass der Flachkörper nach Aushärten zu einem Elastomer aus der Form entfernt wird, als auch für den Fall, dass der Flachkörper während des Austrennens einzelner Koppelelemente in der Form verbleibt. Für den Fall, dass der Flachkörper während des Austrennens in der Form verbleibt, können unterschiedliche Abmessungen von Bodenabschnitt und Koppelelement dadurch erzielt werden, dass die Leistung des Wasser- oder Laserstrahls in entsprechender Weise angepasst wird. Zur Erzeugung ausschließlich einer Trennkontur des Koppelelements genügen niedrigere Leistungen; zur Herstellung einer auch den Boden der Form durchdringenden Trennlinie kann die Leistung erhöht werden.

Eine besonders einfache Möglichkeit des Austrennens eines Koppelelements und/oder eines Bodenabschnitts ist jedoch das Ausstanzen. Dementsprechend ist ein bevorzugtes Austrennwerkzeug ein Stanzwerkzeug.

Besonders bevorzugt ist es, wenn das Stanzwerkzeug zwei in Stanzrichtung gesehen zueinander versetzte Stanzelemente aufweist, wobei ein erstes Stanzelement zur zumindest anteiligen Austrennung eines Koppelelements aus dem Flachkörper dient und wobei ein zweites Stanzelement zur Durchtrennung des Flachkörpers und zum Austrennen eines Bodenabschnitts des Bodens der Form dient.

Insbesondere dient ein erstes Stanzelement zur Durchtrennung eines ersten Koppelelementabschnitts eines Koppelelements aus dem Flachkörper, während ein zweites Stanzelement zeitlich einander folgend erst zur Durchtrennung eines an den ersten Koppelelementabschnitt angrenzenden zweiten Koppelelementabschnitts des Koppelelements und dann zum Austrennen eines Bodenabschnitts des Bodens der Form dient. In Stanzrichtung gesehen ist das erste Stanzelement gegenüber dem zweiten Stanzelement zurückversetzt, und zwar um ein Maß, das im Wesentlichen der Dicke des Bodens der Form entspricht.

Insbesondere sind zwei zueinander versetzte Stanzelemente bevorzugt, wenn der Bodenabschnitt eine Unterseite des Koppelelements im Bereich eines Handhabungsabschnitts überragen soll.

Bei einer weiteren Ausführungsform der Erfindung ist vorgesehen, dass eine Schutzfolie als von dem Koppelelement ablösbares Schutzelement für die Oberseite des Koppelelements verwendet wird. Eine solche Schutzfolie kann nachträglich auf ein bereits vereinzeltes Koppelelement aufgesetzt werden; es kann aber auch auf den bereits ausgehärteten oder noch nicht ausgehärteten Flachkörper aufgelegt werden, sodass auch diese Schutzfolie im Zuge der Austrennung des Koppelelements durch einen einfachen Austrennvorgang, insbesondere durch Stanzen, aber auch durch Wasser- oder Laserstrahlschneiden, vereinzelt werden kann.

Auch für ein an der Oberseite des Koppelelements angeordnetes Schutzelement ist es bevorzugt, wenn ein Griffabschnitt vorgesehen ist, der das Ablösen des Schutzelements von dem Koppelelement vereinfacht. Bei diesem Griffabschnitt ist es jedoch bevorzugt, dass der Griffabschnitt separat von einer Folienschicht vorgesehen ist, beispielsweise nachträglich angebracht wird. Auf diese Weise kann ein Schutzfolienabschnitt, welcher flächenmäßig identisch ist zu dem Koppelelement, im Zuge des Austrennens des Koppelements aus dem Flachkörper hergestellt werden, nämlich indem das Austrennwerkzeug in einem Arbeitsgang die obere Schutzfolie und den Flachkörper durchtrennt.

Bei einer erfindungsgemäßen Vorrichtung ist es ferner bevorzugt, wenn diese eine Ausrichteinrichtung zur Ausrichtung der Form in einer horizontalen Ebene aufweist. Auf diese Weise ist von einem Fertigungsort unabhängig gewährleistet, dass der Flachkörper eine über die Fläche hinweg konstante Dicke aufweist.

Ferner ist bevorzugt, wenn die Vorrichtung eine Ansaugeinrichtung zur Fixierung der Form auf einer Aufstellfläche aufweist, um eine unabsichtliche Bewegung der Form, insbesondere während des Aushärtevorgangs, zu vermeiden. Besonders bevorzugt ist es, wenn die Ansaugeinrichtung in Form eines Vakuumtischs bereitgestellt wird, welcher eine werkzeuglose Fixierung der Form ermöglicht. Die Vakuumtischplatte wiederum ist vorzugsweise mittels der vorstehend genannten Ausrichteinrichtung ausrichtbar.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigt
- Fig. 1: eine perspektivische Explosionsdarstellung einer Ausführungsform einer Vorrichtung zur Herstellung eines optischen Koppelelements aus Elastomer;
- Fig. 2: eine perspektivische Ansicht der Vorrichtung gemäß Fig. 1;
- Fig. 3: eine Draufsicht auf einen Teil der Vorrichtung und ein Stanzwerkzeug;
- Fig. 4: eine Seitenansicht längs einer in Fig. 3 mit IV - IV bezeichneten Schnittebene;
- Fig. 5: eine perspektivische Ansicht eines optischen Koppelelements mit einem bodenseitig angeordneten Schutzelement;
- Fig. 6: eine schematische Ansicht des Verlaufs der Stanzkonturen des in den Figuren 3 und 4 dargestellten Stanzwerkzeugs;
- Fig. 7: eine schematische Ansicht eines alternativen Verlaufs der Stanzkonturen des in den Figuren 3 und 4 dargestellten Stanzwerkzeugs; und
- Fig. 8: eine perspektivische Ansicht eines optischen Koppelelements mit einem bodenseitig angeordneten Schutzelement, hergestellt unter Verwendung eines Stanzwerkzeugs mit Stanzkonturen gemäß Figur 7.

Eine Ausführungsform einer Vorrichtung zur Herstellung eines optischen Koppelelements aus Elastomer ist in der Zeichnung insgesamt mit dem Bezugszeichen 10 bezeichnet. Die Vorrichtung 10 umfasst eine Ausrichteinrichtung 12 zur Anordnung einer Ansaugeinrichtung 14, welche wiederum zur Fixierung einer Form 16 dient. Die Vorrichtung umfasst eine optionale Abdeckplatte 18, welche zur Abdeckung der Form 16 dient, ohne dabei in Kontakt mit einem in die Form 16 einzufüllenden Material zu gelangen.

Die Ausrichteinrichtung 12 weist eine bodenseitige Grundplatte 20 zur Anordnung auf einem Tisch oder einer Raumbodenfläche auf. Ferner umfasst die Ausrichteinrichtung 12 eine Stellplatte 22, welche mittels Stellelementen 24 in ihrer Neigung relativ zu der Grundplatte 20 einstellbar ist. Vorzugsweise sind drei zueinander beabstandete Stellelemente 24 vorgesehen, die gemeinsam eine Stellebene aufspannen. Die Stellelemente 24 ermöglichen es, die Stellplatte 22 in einer exakt horizontalen Lage auszurichten.

Die Stellplatte 22 dient zur Auflage der Ansaugeinrichtung 14. Diese ist in Form einer Vakuum- oder Hohlplatte 26 ausgebildet und weist an ihrer Oberseite Lufteintrittsöffnungen 28 auf, welche über einen Hohlraum 30 mit einem Vakuumanschluss 32 kommunizieren.

Es ist möglich, jedoch nicht zwingend, dass auf der Oberseite der Platte 26 Positionierelemente 34 angeordnet sind, welche als Anschlag für die Form 16 und/oder als Libellen zur Prüfung der horizontalen Ausrichtung ausgebildet sind.

Die Form 16 weist einen ebenen Boden 36 auf, welcher an seiner Berandung in eine umfangsseitig umlaufende Seitenwand 38 übergeht. Optional kann am oberen Rand der Seitenwand 38 ein sich im Wesentlichen parallel zu dem Boden erstreckender Kragen 40 vorgesehen sein. Dieser stabilisiert die Form 16 und dient zur Auflage einer unterseitigen Randfläche der optionalen Abdeckplatte 18.

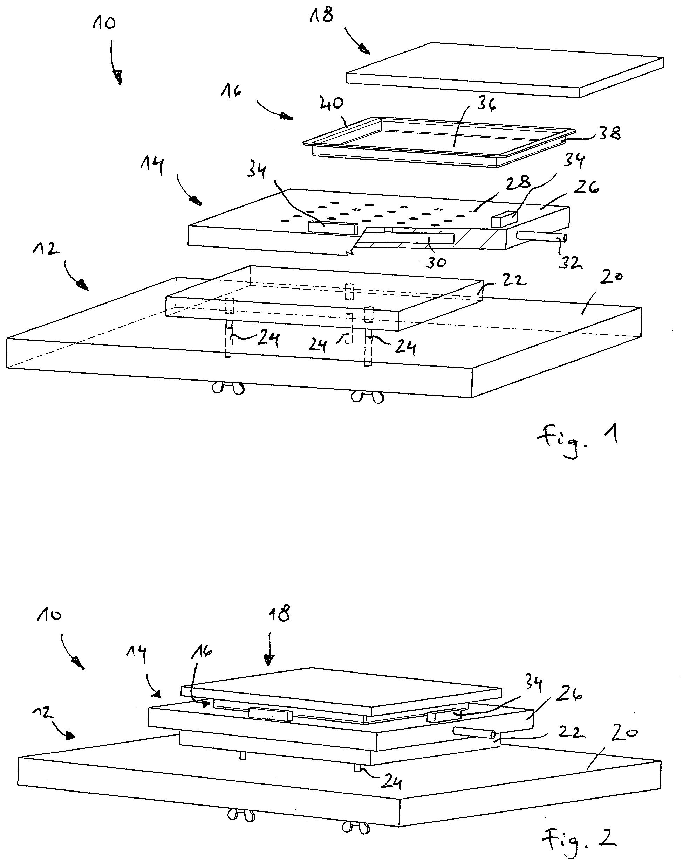

Im montierten Zustand der Vorrichtung (siehe Figur 2) ist die Form 16 über die Stellplatte 22 exakt horizontal ausgerichtet. Ferner ist die Ansaugeinrichtung 14 fest mit der Stellplatte 22 verbunden. Die Form 16 ist an der Ansaugeinrichtung 14 fixiert, indem an den Vakuumanschluss 32 Vakuum angelegt wird. Die Seitenwand 38 der Form 16 liegt an den Positionierelementen 34 an.

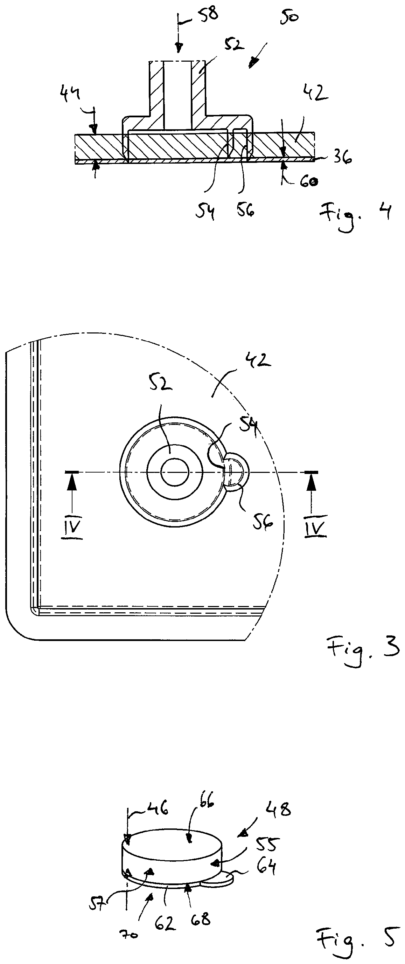

Zur Herstellung eines Koppelelements wird die Form 16 mit einer fließfähigen, noch nicht ausgehärteten Silikonrezeptur oder mit deren Bestandteilen gefüllt. Dabei ist die Füllmenge so bemessen, dass ein in der Form 16 nach Aushärtung entstehender formstabiler Flachkörper 42 eine Dicke 44 aufweist (vergleiche Figur 4), welche einer Dicke 46 eines aus dem Flachkörpern auszutrennenden Koppelelements 48 (vergleiche Figur 5) entspricht. Wenn das verwendete Material schwindungs- oder schrumpffrei ist, ist die Füllhöhe des fließfähigen Materials identisch gleich der Dicke 44 des Flachkörpers 42 nach Aushärtung zu einem formstabilen Silikonelastomer. Sofern während oder nach der Aushärtung eine Schrumpfung oder ein Schwinden stattfindet, ist die Einfüllhöhe des fließfähigen Materials der Schwindung entsprechend höher als die Dicke 44 des Flachkörpers 42.

Um ein einzelnes Koppelelement 48 aus dem Flachkörper 42 herauszutrennen, wird vorzugsweise ein Austrennwerkzeug 50 in Form eines Stanzwerkzeugs 52 verwendet. Insbesondere verbleibt der Flachkörper 42 während des Austrennens eines Koppelelements in der Form 16.

Das Stanzwerkzeug 52 weist mindestens ein Stanzelement, vorzugsweise zwei Stanzelemente 54, 56 auf. Ein erstes Stanzelement 54 ist in einer Stanzrichtung 58 gesehen bezogen auf ein zweites Stanzelement 56 zurückversetzt. Das Maß der Zurückversetzung entspricht einer Dicke 60 des Bodens 36 der Form 16. Auf diese Weise ist es möglich, in nur einem Stanzvorgang gleichzeitig ein Koppelelement 48 auszutrennen, welches beispielsweise eine kreisförmige Erstreckung hat, und einen Bodenabschnitt 62, welcher das Koppelelement 48 mit einem Handhabungsabschnitt 64 (vergleiche Figur 5) überragt. Im Bereich des Handhabungsabschnitts 64 weicht die Erstreckung des Bodenabschnitts 62 von der Erstreckung des Koppelelements 48 ab.

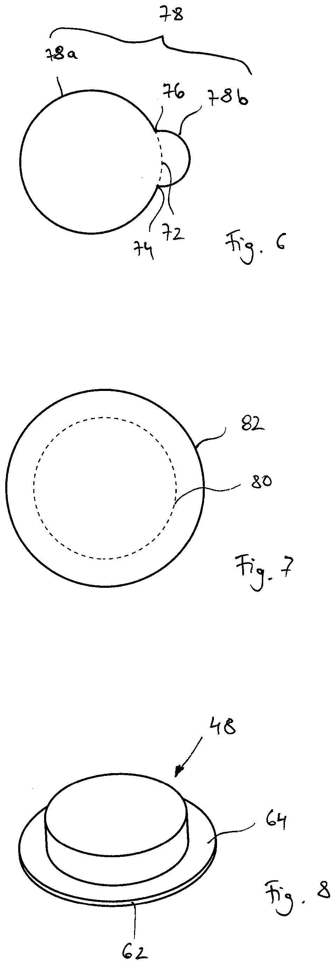

Das erste Stanzelement 54 weist eine in Figur 6 schematisch mit einer gestrichelten Linie dargestellte Stanzkontur 72 auf. Die Stanzkontur 72 erstreckt sich zwischen einem Bereich 74 und einem Bereich 76.

Das zweite Stanzelement 56 weist eine in Figur 6 mit durchgezogener Linie dargestellte Stanzkontur 78 auf, welche sich aus einem ersten Konturabschnitt 78a und einem zweiten Konturabschnitt 78b zusammensetzt. Die Übergänge zwischen den Konturabschnitten 78a und 78b sind in den Bereichen 74 und 76 angeordnet. Die Abweichung des Verlaufs des Konturabschnitts 78b von dem Verlauf der Stanzkontur 72 bestimmt die Geometrie und Größe des Handhabungsabschnitts 64.

Das zweite Stanzelement 56 weist eine in sich geschlossene Stanzkontur 78 auf, während das erste Stanzelement 54 eine offene, nicht in sich geschlossene Stanzkontur 72 besitzt. Das erste Stanzelement 54 dient zur Durchtrennung des Flachkörpers 42 im Bereich eines ersten Teilumfangs 55 (vergleiche Figur 5) des Koppelelements 48. Der Teilumfang 55 des Koppelelements 48 korrespondiert mit der sich zwischen den Bereichen 74 und 76 erstreckenden Stanzkontur 72 des ersten Stanzelements 54 (vergleiche Figur 6).

Das zweite Stanzelement 56 dient zur Durchtrennung des Flachkörpers 42 im Bereich eines an den ersten Teilumfang 55 des Koppelelements 48 angrenzenden zweiten Teilumfangs 57 (vergleiche Figur 5). Der Teilumfang 57 des Koppelelements 48 korrespondiert mit dem Konturabschnitt 78a der Stanzkontur 78 des zweiten Stanzelements 56 (vergleiche Figur 6).

Das zweite Stanzelement 56 durchstanzt in dem Bereich des zweiten Teilumfangs 57 des Koppelelements 48 nicht nur zunächst den Flachkörper 42, sondern anschließend auch den Boden 36 der Form 16.

Der zweite Konturabschnitt 78b des zweiten Stanzelements 56 durchstanzt ebenfalls zunächst den Flachkörper 42 und anschließend auch den Boden 36 der Form 16. Der von dem zweiten Stanzelement 56 mit den beiden Konturabschnitten 78a und 78b ausgestanzte Bodenabschnitt 62 überragt das Koppelelement 48 im Bereich des Handhabungsabschnitts 64.

In Figur 7 ist ein alternativer Verlauf für Stanzkonturen des ersten Stanzelements 54 und des zweiten Stanzelements 56 des Stanzwerkzeugs 52 dargestellt. Das erste Stanzelement 54 weist alternativ zu einer Stanzkontur 72 gemäß Figur 6 eine in sich geschlossene, in Figur 7 mit gestrichelter Linie dargestellte Stanzkontur 80 auf. Das zweite Stanzelement 56 weist alternativ zu einer Stanzkontur 78 gemäß Figur 6 eine mit durchgezogener Linie dargestellte Stanzkontur 82 auf. Die Stanzkonturen 80 und/oder 82 sind beispielsweise kreisförmig.

Da die Stanzkontur 82 die Stanzkontur 80 entlang des gesamten Umfangs der Stanzkontur 80 überragt, kann bei Verwendung eines Stanzwerkzeugs 52 mit solchen Konturen 80, 82 ein umlaufender, beispielsweise ringförmiger, Handhabungsabschnitt 64 hergestellt werden, der ein Koppelelement 48 flächenmäßig in allen Richtungen überragt (vergleiche Figur 8). Im Zuge des Ausstanzens des Koppelelements 48 aus dem Formkörper 42 wird bei Herstellung einer Anordnung gemäß Figur 8 zusätzlich ein in der Zeichnung nicht dargestellter, ringförmiger Materialabschnitt erzeugt, der das Koppelelement 48 umgibt. Dieser Materialabschnitt entsteht in einem ringförmigen Zwischenraum zwischen den Stanzelementen 54 und 56 und kann nach Entfernen/Abheben des Stanzwerkzeugs 52 von dem Flachkörper 42 von dem ringförmigen Handhabungsabschnitt 64 abgehoben und entsorgt werden.

Mehrere Stanzwerkzeuge 52 können vorteilhaft zu einer Stanzwerkzeuganordnung zusammengefasst werden, um in einem Stanzvorgang gleichzeitig mehrere Koppelelemente 48 aus einem Flachkörper 42 auszutrennen.

Optional kann die Form 16 nach Einfüllung des fließfähigen und auszuhärtenden Silikonmaterials mit der Abdeckplatte 18 abgedeckt werden, um einen potentiellen Einschluss von Staub oder anderen Fremdkörpern während des Aushärtevorgangs zu vermeiden. Ferner ist es optional möglich, insbesondere vor Austrennung eines Koppelelements 48 aus dem Flachkörper 42, eine Schutzfolie auf den bereits ausgehärteten oder auf den noch auszuhärtenden Flachkörper 42 zu legen.

Im Zuge der Austrennung eines Koppelelements 48 wird unmittelbar zuvor die Schutzfolie mittels des Stanzwerkzeugs 52 durchtrennt, der an dem Koppelelement verbleibende Teil der Schutzfolie bildet dann ein Schutzelement für eine Oberseite 66 des Koppelelements 48. Eine Unterseite 68 des Koppelelements 48 ist durch den Bodenabschnitt 62 geschützt, welcher ein Schutzelement 70 bildet.

Das Schutzelement 70 oder die Schutzelemente schützt oder schützen ein Koppelelement 48 unmittelbar ab dessen Herstellung und bis unmittelbar vor der Montage des Koppelelements 48 an der Innenseite einer Fahrzeugscheibe, bei der das Koppelelement 48 zwischen der Innenseite einer Fahrzeugscheibe und der Koppelfläche eines optischen Sensors angeordnet wird.

## Patentansprüche

1. Verfahren zur Herstellung eines optischen Koppelelements (48) aus Elastomer, umfassend:
- Einfüllen einer fließfähigen Elastomerrezeptur oder von deren Bestandteilen in eine Form (16) zur Herstellung eines Flachkörpers (42), dessen Dicke (44) abgestimmt ist auf die Dicke (46) eines herzustellenden Koppelelements (48),
- Aushärten zu einem formstabilen Elastomer,
- Austrennen einzelner Koppelelemente (48) aus dem Flachkörper (42).

2. Verfahren nach Anspruch 1, **dadurch gekennzeichnet, dass** das Austrennen erfolgt, während der Flachkörper (42) in der Form (16) angeordnet ist.

3. Verfahren nach einem der voranstehenden Ansprüche, **dadurch gekennzeichnet, dass** ein Bodenabschnitt (62) des Bodens (36) der Form (16) ausgetrennt wird, wobei der Bodenabschnitt (62) ein von dem Koppelelement (48) ablösbares Schutzelement (70) für eine Unterseite (68) des Koppelelements (48) bildet.

4. Verfahren nach Anspruch 3, **dadurch gekennzeichnet, dass** der Bodenabschnitt (62) und das Koppelelement (48) identisch große Flächen aufweisen.

5. Verfahren nach Anspruch 3, **dadurch gekennzeichnet, dass** der Bodenabschnitt (62) das Koppelelement (48) mit mindestens einem Handhabungsabschnitt (64) flächenmäßig überragt.

6. Verfahren nach einem der voranstehenden Ansprüche, **dadurch gekennzeichnet, dass** das Austrennen durch Ausstanzen, Wasser- oder Laserstrahlschneiden erfolgt.

7. Verfahren nach einem der voranstehenden Ansprüche, **dadurch gekennzeichnet, dass** eine Schutzfolie als von dem Koppelelement (48) ablösbares Schutzelement für eine Oberseite (66) des Koppelelements (48) verwendet wird.

8. Verfahren nach Anspruch 7, **dadurch gekennzeichnet, dass** das Schutzelement mit einem Griffabschnitt versehen ist, der das Ablösen des Schutzelements von dem Koppelelement (48) vereinfacht.

9. Vorrichtung (10) zur Herstellung eines optischen Koppelelements (48) aus Elastomer, umfassend eine Form (16) zum Einfüllen einer fließfähigen Elastomerrezeptur oder von deren Bestandteilen zur Herstellung eines Flachkörpers (42), dessen Dicke (44) abgestimmt ist auf die Dicke (46) eines herzustellenden Koppelelements (48), und ein Austrennwerkzeug (50) zum Austrennen einzelner Koppelelemente (48) aus dem Flachkörper (42).

10. Vorrichtung (10) nach Anspruch 9, **dadurch gekennzeichnet, dass** die Form (16) aus einem Kunststoffmaterial hergestellt ist.

11. Vorrichtung (10) nach Anspruch 9 oder 10, **dadurch gekennzeichnet, dass** das Austrennwerkzeug (50) ein Stanzwerkzeug (52) ist.

12. Vorrichtung (10) nach Anspruch 11, **dadurch gekennzeichnet, dass** das Stanzwerkzeug (52) zwei in Stanzrichtung (58) gesehen zueinander versetzte Stanzelemente (54, 56) aufweist, wobei ein erstes Stanzelement (54) zur zumindest anteiligen Austrennung eines Koppelelements (48) aus dem Flachkörper (42) dient und wobei ein zweites Stanzelement (56) zur Durchtrennung des Flachkörpers (42) und zum Austrennen eines Bodenabschnitts (62) des Bodens (36) der Form (16) dient.

13. Vorrichtung (10) nach Anspruch 12, **dadurch gekennzeichnet, dass** eine Stanzkontur (78, 82) des zweiten Stanzelements (56) eine Stanzkontur (72, 80) des ersten Stanzelements (54) flächenmäßig überragt.

14. Vorrichtung (10) nach einem der Ansprüche 9 bis 13, **dadurch gekennzeichnet, dass** die Vorrichtung (10) eine Ausrichteinrichtung (12) zur Ausrichtung der Form (16) in einer horizontalen Ebene aufweist.

15. Vorrichtung (10) nach einem der Ansprüche 9 bis 14, **dadurch gekennzeichnet, dass** die Vorrichtung (10) eine Ansaugeinrichtung (14) zur Fixierung der Form (16) auf einer Aufstellfläche aufweist.

## Claims

1. A method for the production of an optical coupling element (48) made of elastomer, comprising:
- filling a free-flowing elastomer formulation or its constituents into a mold (16) in order to produce a flat sheet (42) whose thickness (44) is adapted to the thickness (46) of the coupling element (48) that is to be produced,
- curing to form an inherently stable elastomer,
- cutting individual coupling elements (48) out of the flat sheet (42).

2. The method according to claim 1, **characterized in that** the cutting out procedure is carried out while the flat sheet (42) is in the mold (16).

3. The method according to one of the preceding claims, **characterized in that** a bottom section (62) of the bottom (36) of the mold (16) is cut out, whereby the bottom section (62) forms a protective element (70) that can be detached from the coupling element (48) and that serves to protect the underside (68) of the coupling element (48).

4. The method according to claim 3, **characterized in that** the bottom section (62) and the coupling element (48) have surface areas of identical sizes.

5. The method according to claim 3, **characterized in that** the bottom section (62) extends beyond the coupling element (48) by at least one handling section (64).

6. The method according to one of the preceding claims, **characterized in that** the cutting out procedure is carried out by means of stamping, water-jet cutting or laser-beam cutting.

7. The method according to one of the preceding claims, **characterized in that** a removable protective film is used as a protective element that can be removed from the coupling element and that protects the top (66) of the coupling element (48).

8. The method according to claim 7, **characterized in that** the protective element is provided with a gripping section that facilitates the removal of the protective element from the coupling element (48).

9. A device (10) for the production of an optical coupling element (48) made of elastomer, comprising a mold (16) to be filled with a free-flowing elastomer formulation or with its constituents in order to produce a flat sheet (42) whose thickness (44) is adapted to the thickness (46) of the coupling element (48) that is to be produced, and a cutting tool (50) to cut individual coupling elements out of the flat sheet (42).

10. The device (10) according to claim 9, **characterized in that** the mold (16) is made of a plastic material.

11. The device (10) according to claim 9 or 10, **characterized in that** the cutting tool (50) is a stamping tool (52).

12. The device (10) according to claim 11, **characterized in that** the stamping tool (52) has two stamping elements (54, 56) that are arranged offset relative to each other as seen in the stamping direction (58), whereby a first stamping element (54) serves to at least partially cut a coupling element (48) out of the flat sheet (42), while a second stamping element (56) serves to cut through the flat sheet (42) and to cut out a bottom section (62) of the bottom (36) of the mold (16).

13. The device (10) according to claim 12, **characterized in that** a stamping contour (78, 82) of the second stamping element (56) extends beyond a stamping contour (72, 80) of the first stamping element (54).

14. The device (10) according to one of claims 9 to 13, **characterized in that** the device (10) has an orientation mechanism (12) that serves to orient the mold (16) in a horizontal plane.

15. The device (10) according to one of claims 9 to 14, **characterized in that** the device (10) has a suction mechanism (14) that serves to affix the mold (16) on a placement surface.

## Revendications

1. Procédé de production d'un élément de couplage optique (48) en élastomère, comprenant les étapes consistant à :
- verser une formulation d'élastomère pouvant s'écouler ou des constituants de celle-ci dans un moule (16) pour produire un corps plat (42), dont l'épaisseur (44) est adaptée à l'épaisseur (46) d'un élément de couplage (48) à produire,
- durcir pour former un élastomère de forme stable,
- découper des éléments de couplage individuels (48) à partir du corps plat (42).

2. Procédé selon la revendication 1, **caractérisé en ce que** la découpe a lieu pendant que le corps plat (42) est disposé dans le moule (16).

3. Procédé selon l'une quelconque des revendications précédentes, **caractérisé en ce qu'**un tronçon de fond (62) du fond (36) du moule est découpé (16), dans lequel le tronçon de fond (62) forme un élément de protection (70) pouvant être détaché de l'élément de couplage (48) pour un côté inférieur (68) de l'élément de couplage (48).

4. Procédé selon la revendication 3, **caractérisé en ce que** le tronçon de fond (62) et l'élément de couplage (48) présentant de grandes surfaces identiques.

5. Procédé selon la revendication 3, **caractérisé en ce que** le tronçon de fond (62) de l'élément de couplage (48) dépasse en termes de surface avec au moins un tronçon de manipulation (64).

6. Procédé selon l'une quelconque des revendications précédentes, **caractérisé en ce que** la découpe est effectuée par poinçonnage, découpe à l'eau ou au laser.

7. Procédé selon l'une quelconque des revendications précédentes, **caractérisé en ce qu'**un film de protection est utilisé comme élément de protection pouvant être détaché de l'élément de couplage (48) pour un côté supérieur (66) de l'élément de couplage (48).

8. Procédé selon la revendication 7, **caractérisé en ce que** l'élément de protection est pourvu d'une partie de préhension qui facilite le détachement de l'élément de protection depuis l'élément de couplage (48).

9. Dispositif (10) pour produire un élément de couplage optique (48) en élastomère, comprenant un moule (16) pour le versement d' une formulation d'élastomère pouvant s'écouler ou de composants de celle-ci pour la production d'un corps plat (42) dont l'épaisseur (44) est adaptée à l'épaisseur (46) d'un élément de couplage (48) à produire, et un outil de découpe (50) pour découper des éléments de couplage individuels (48) à partir du corps plat (42).

10. Dispositif (10) selon la revendication 9, **caractérisé en ce que** le moule (16) est réalisé en une matière plastique.

11. Dispositif (10) selon la revendication 9 ou 10, **caractérisé en ce que** le l'outil de découpe (50) est un outil de poinçonnage (52).

12. Dispositif (10) selon la revendication 11, **caractérisé en ce que** l'outil de poinçonnage (52) présente deux éléments de poinçonnage (54, 56) décalés l'un de l'autre lorsque vus dans la direction de poinçonnage (58), dans lequel un premier élément de poinçonnage (54) sert pour la découpe au moins partielle d'un élément de couplage (48) à partir du corps plat (42), et dans lequel un second élément de poinçonnage (56) sert au sectionnement du corps plat (42) et à la découpe d'un tronçon de fond (62) du fond (36) du moule (16).

13. Dispositif (10) selon la revendication 12, **caractérisé en ce qu'**un contour de poinçonnage (78, 82) du second élément de poinçonnage (56) dépasse en termes de surface d'un contour de poinçonnage (72, 80) du premier élément de poinçonnage (54).

14. Dispositif (10) selon l'une quelconque des revendications 9 à 13, **caractérisé en ce que** le dispositif (10) comporte un dispositif d'alignement (12) pour l'alignement du moule (16) dans un plan horizontal.

15. Dispositif (10) selon l'une quelconque des revendications 9 à 14, **caractérisé en ce que** le dispositif (10) comprend un dispositif d'aspiration (14) pour fixer le moule (16) sur une surface de support.
